# EUROPEAN PATENT APPLICATION

(11) **EP 1 319 738 A1**
(43) Date of publication of application: **18.06.2003**
(21) Application number: 01204891.4
(22) Date of filing: 17.12.2001
(51) Int. Cl.: D01F 6/46, D01F 8/06, D01F 1/10, D01F 1/09, D01F 1/07

(54) **Modified polyolefin fibres**

(71) Applicant: Atofina Research S.A., 7181 Seneffe (Feluy) (BE)
(72) Inventor: Demain, Axel, 1457 Tourinnes-Saint-Lambert (BE)

(57) **Abstract**

Polyolefin material comprising a core portion composed of at least one of polypropylene produced using a Ziegler-Natta catalyst, isotactic homopolymer or random copolymer of propylene produced using a metallocene catalyst or polyethylene, preferably linear low density polyethylene, and an external layer composed of the core portion material additionally blended with a syndiotactic polypropylene, the syndiotactic polypropylene including at least one particulate material or chemical additive.

## Description

The present invention relates to modified polyolefin fibres.

It is known in the art that the properties of a polymer may be modified by introducing particulate material into the polymer resin matrix in order to produce a composite material. The particulate material is selected depending on the desired properties of the composite material. Particulate materials are typically introduced into polymer resins for increasing the mechanical properties of the resin, for example the rigidity or wear resistance, the thermal properties and/or the electrical properties.

For example, JP-A-60-023432 discloses a composite resin composition composed of polypropylene, mica treated with an organosilane compound, modified polyolefin and glass fibre treated with an organosilane compound. The composition is stated to have high rigidity and excellent fluidity, shrinkage anisotropy and retention of flexural strength at a weld part.

JP-A-02-173048 discloses a polyolefin resin composition incorporating an inorganic filler, such as precipitated calcium carbonate, for improving the impact strength without impairing the rigidity of the composition.

JP-A-60-020947 discloses a resin composition for use in the production of packaging boxes consisting of polypropylene, high density polyethylene, an inorganic filler such as calcium carbonate and a modified polyolefin. The resultant composition is stated to have improved properties such as an excellent hinge at a fold, embossing characteristics, printability, adhesion and water resistance.

JP-A-58-040602 discloses a resin composition for an acoustic material composed of polypropylene, an inorganic filler such as calcium carbonate or talc, polyethylene and a modified polyolefin. The composition exhibits high impact strength, flowability and good acoustic properties.

When particulate fillers are incorporated into polyethylene or into polypropylene which has been produced using a Ziegler-Natta catalyst (hereinafter Ziegler-Natta polypropylene (znPP))or a metallocene catalyst (hereinafter metallocene polypropylene (mPP)), for example by compounding the polyethylene or polypropylene and the particles added thereto in an extruder or in a Brandburry malaxor, there tends to be an undesired dramatic increase in rigidity and brittleness accompanying the increase in the concentration of the particulate material.

For the manufacture of polymers for use in the spinning of fibres, the addition of such particulate material to the polymer can result in a dramatic decrease in the spinnability of the fibres, leading to fibre breakage on spinning. This tends to cause a reduction in the permitted fibre spinning speed, or requires an increase in the fibre diameter to be spun.

In order to improve the electrical and/or thermal conductivity of the spun fibres, it is known to incorporate into the resin matrix electrically conductive particles such as carbon black. Other particles such as for example carbon fibres, metallic particles, or particles coated with electrically conductive material can also be incorporated into the resin matrix. However, this can result in very poor spinning characteristics. The surface of spun fibres or non-woven fabrics can also be subjected to a metallising technique, such as that applied for polymer films, in order to improve the electrical and thermal conductivity of the fibres. Alternatively, the surface of the fibres may be artificially electrically charged by friction or electrostatically to enable the fibres to attract, by an electrical attraction, conductive particles. However, this tends not to result in continuous layers of electrically conductive particles on the surface of the fibres.

Fibres also have a characteristic referred to as the "dyeability". The fibres are usually dyed either in bulk or on the surface thereof. For bulk dying, liquid dyes or compounds containing pigments are extruded together with the polymer when spinning the fibres. For surface dying, fibres, either in the form of continuous fibres, non-wovens or carpets or any other form, are printed either by contact with a dye or by soaking in a dye. Compatibility with the dyes can be further improved by treatment surface of the fibres, such as by a corona discharge treatment.

It is further known to produce fibres wherein there is a concentration gradient of fillers, such as additives extending from surface of the fibre to the core of the fibre. The additives or fillers on the surface of the fibres may be degraded, for example by thermal effects, which particularly applies to anti-oxidant additives.

Polymers containing different types of additives or fillers can be employed to produce concentric or any other type of bi-component fibres.

The present invention aims to provide polyolefin material, in the form of fibres, incorporating particulate materials or chemical additives, said fibers having improved properties.

Accordingly, the present invention provides a polyolefin material including syndiotactic polypropylene incorporating at least one particulate material or chemical additive.

The present invention provides a polyolefin material comprising a core portion composed of at least one of polypropylene produced using a Ziegler-Natta catalyst (znPP), isotactic homopolymer or random copolymer of propylene produced using a metallocene catalyst (mPP) or polyethylene (PE), preferably linear low density polyethylene (LLDPE) and an external layer composed of the core portion material additionally blended with a syndiotactic polypropylene, said syndiotactic polypropylene (sPP) including at least one particulate material or chemical additive.

Preferably the present invention is used to prepare modified polyolefin fibres.

The sPP is preferably a homopolymer or a random copolymer with a RRRR of at least 70%. The sPP may alternatively be a block copolymer having a higher comonomer content, or a terpolymer. Preferably, the sPP has a melting temperature of up to 160 °C and typically it has two distinct melting peaks, the positions of which depend upon the percentage of racemic pentad in the sPP. The sPP typically has an melt flow index MI2 of from 0.1 to 1000 g/10 min, more typically of from 1 to 60 g/10 min. The MI2 is measured following the method of standard test ASTM D 1238 at a temperature of 230 °C and under a load of 2.16 kg. The sPP may have a monomodal or multimodal molecular weight distribution, and most preferably, it is a bimodal polymer in order to improve the processability of the sPP.

The present invention is predicated on the discovery that when fibres are made from a blend of polyolefin, such as at least one of polypropylene produced using a Ziegler-Natta catalyst, isotactic homopolymer or random copolymer of propylene produced using a metallocene catalyst and/or polyethylene (PE), preferably linear low density polyethylene (LLDPE), in combination with syndiotactic polypropylene, when the syndiotactic polypropylene is present in low or moderate concentrations of a few weight percent, the syndiotactic polypropylene is preferentially rejected to the surface of the fibres. It is observed that from 50 to 90 wt% of the syndiotactic polypropylene present in the blend is rejected to the surface of the blend. Accordingly, if the syndiotactic polypropylene contains particulate material or chemical additive, a skin of modified syndiotactic polypropylene is formed at the surface of the fibres, whose core remains barely modified and has a low, if any, concentration of particulate material or chemical additive. Therefore, particulate material or chemical additive may be incorporated preferentially into the surface of the fibres and since there is little or no particulate material or chemical additive in the core of the fibres, the spinning of the fibres is little effected by the presence of the particulate material or chemical additive. The low concentration of particulate material in the core of the fibres is surprising since those particles could be spread in the Ziegler-Natta polypropylene, in the metallocene isotactic homopolymer or random copolymer of propylene and/or in the polyethylene or in the linear low density polyethylene, during extrusion of the particulate-containing syndiotactic polypropylene together with the core material.

In accordance with the invention not only do the particles and additives tend to be mainly concentrated in the surface of the fibres, thereby leaving the spinning characteristics of the core polymer only affected to a small degree, but also much less chemical additive or particulate material is needed to obtain a desired change in the properties of the surface of the fibres, thereby reducing the added cost of the particulate material or chemical additive to make modified fibres. The concentration of particulate material in the syndiotactic polypropylene (sPP) must be sufficient to produce at the surface of the fibres the same concentration as that produced from the core polymer of the prior art, wherein the filler is dispersed throughout the whole fibre. Said concentration in the sPP can be up to 10 times the concentration recommended by the manufacturer in order to produce the desired effect, preferably, it is up to 5 times the recommended concentration and most preferably, it is about twice the recommended concentration.

Furthermore, no additional equipment needs to be employed compared to conventional spinning equipment to produce modified fibres.

In one preferred aspect of the invention, the particles are incorporated into the sPP in order to improve mechanical properties of the fibre such as wear resistance. The particulate material may comprise at least one of alumina, chopped glass fibres, chopped carbon fibres, calcium carbonate, carbon black, silicon beads or particles, graphite or nanoparticles. The incorporation of these particulate materials into syndiotactic polypropylene enables a much higher particulate concentration to be achieved as compared to znPP, yet retaining a very good impact resistance and flexibility, thereby allowing manipulation of the composite material without breaking it. In addition, the amount of dust produced during handling is considerably reduced.

In accordance with another aspect of the invention, the electrical conductivity of the syndiotactic polypropylene may be improved by the incorporation of electrically conductive particles as filler into the syndiotactic polypropylene. The electrically conductive particles may comprise at least one of carbon black, carbon fibres, metallic particles, or particles coated with electrically conductive material.

The electrical conductivity of the composite material depends upon the concentration of the filler particles in the syndiotactic polypropylene. At low filler concentrations, the filler particles form clusters wherein the particles touch each other but the clusters are individual and separated from each other. With such a concentration range, the composite is considered to be an electrically insulative material. However, the electrical conductivity generally increases with increasing filler concentration. Accordingly, the use of electrically conductive particles as filler permits the manufacture of a composite having improved static electricity dissipation as compared to pure syndiotactic polypropylene.

With a yet further increase in the filler concentration, the particulate clusters start to touch each other, thereby forming an electrically conductive body in the polymer matrix. In a very narrow range of increasing particulate concentration, the electrical resistivity of the composite suddenly drops, and the material becomes electrically conductive. Such a concentration range is known as the "percolation threshold". Above the percolation threshold, any further increase in the filler concentration results in a further increase of the electrical conductivity. Usually, as soon as the percolation threshold is attained, the properties of the fibres are dramatically modified. With a sPP blend as compared to a pure znPP, the core of the fibres remains almost unaltered thereby facilitating spinning.

The concentration value at the percolation threshold depends on the type and geometry of the filler particles. For elongate filler particles, the higher the aspect ratio (the shape factor) of the particles, this being the ratio of the largest to the smallest characteristic dimensions, the smaller the value of the concentration at the percolation threshold. For carbon black particles, the more spherical the particles, the higher the percolation threshold. In contrast, highly structured carbon black particles, i.e. particles of a complex shape, usually made from spheres merged into each other, provide composites with a much lower percolation threshold.

Composite materials having improved electrical conductivity have a variety of different applications. For example, syndiotactic polypropylene when filled with particles such as carbon black or other electrically conductive materials can produce sPP having improved static electricity dissipation (i.e. low static electricity sPP), and may be used in film applications and in applications requiring dissipation of static charges such as in fibres for carpets, materials for avoiding dust accumulation, and the shielding or housing of electric or electronic components. Composite materials having improved electrical conductivity also have application as electromagnetic shielding materials, for example for housing electronic components, in mobile telephones, televisions or radios, if the concentration of the electrically conductive filler is around or above the percolation threshold.

In a further aspect of the invention, the thermal conductivity of syndiotactic polypropylene is improved by the incorporation into the sPP matrix of at least one thermally conductive filler, such as for example carbon fibres, carbon black, graphite particles, metallic particles or alumina particles. As for improving the electrical conductivity, the thermal conductivity also has a percolation threshold concentration for the increase in thermal conductivity but the increase in thermal conductivity at the percolation threshold is much less pronounced than for electrical conductivity. Composite resins having improved thermal conductivity have applications as heat sinks for thermal management, or electronic device housings.

In another aspect of the invention fibres may be provided with a high concentration of specific additives on the surface thereof which is preferentially incorporated into the sPP, such as for example biocides, bactericides, flame retardants, nanofillers, antimicrobials, antistatics, anti-UVs.

In yet another aspect of the present invention, fillers can be added to the sPP in order to increase the density of the fibres above that of a reference fluid so that the fibres do not float when soaked in said fluid. This aspect is very important when the fibres are used in the paper industry and more generally in any variation of the wet-laid process.

The syndiotactic polypropylene composites in accordance with the invention are preferably prepared by adding the particulate material to the syndiotactic polypropylene by blending or compounding the materials together in an extruder or Brandburry malaxor. Alternatively, the syndiotactic polypropylene may be dissolved into a solvent, such as for example xylene and the particulate material can be dispersed in the solution. Thereafter the solvent is removed by filtration, sublimation or evaporation to produce the composite material.

In a yet further alternative method, the syndiotactic polypropylene, which may be in the form of powder, pellets or fibres, may be dispersed in water or any other liquid in which the particulate filler is also dispersed. Thereafter, the liquid is flushed away, in leaving an intimate blend of syndiotactic polypropylene and filler. This mixture can be hot pressed or laminated and then further ground or re-extruded. This preparation technique has a particular application for the manufacture of composite materials where the particulate material exhibits a high aspect ratio, which is to be preserved in the ultimate composite material.

The pellets of filled sPP are then dry-blended with those of the core polymer, and extruded as fibres or non-woven fabrics, the latter being prepared either by direct or by indirect methods..

The fibres may be bi- or multi-constituent fibres, each constituent being made of filled sPP blended with at least one of znPP, metallocene produced isotactic polypropylene (miPP) or PE or LLDPE or any blend of these polymers. The fibres may alternatively be bi-component fibres made by co-extrusion of filled sPP and at least one of znPP, miPP, PE or LLDPE or any blend of these polymers for each of the components. For bi-component fibres the two components are extruded from two different extruders. For bi-constituent fibres, the blends of the sPP and the core polymer can be obtained by dry-blending the pellets, flakes or fluff of the two polymers before feeding them into the extruder, using pellets or flakes of a blend of sPP with znPP or miPP or PE or LLDPE or any blend of these polymers that have been extruded together, or by using a polymer made from catalysts containing different kinds of active sites for producing sPP and znPP or miPP or PE or LLDPE or any blend of these polymers.

The fibres can be used in their as-spun form to produce ropes, nets, carpets or carpet backings. Alternatively the fibres can be used as spunlaid non-wovens or non-wovens made from staple fibres either by air-laid, or by wet-laid or by dry-laid processes. The non-wovens can be thermally bonded, with or without additional binding material, or their fibres can be further entangled by needle punching, or water or air entanglement. The fibres and non-woven materials can be further incorporated into a structure made by laminating with a polymer film, or laying on any surface of any material or they can be used in composite structures.

With amounts in the fibres of up to 15 wt% of sPP, there is no significant effect on the spinning characteristics of the blends. At sPP amounts above about 15 wt%, it is required to adapt the processing conditions such as the temperature profile on the extruder in order to optimise the processing temperatures, and yet retain the same throughput as with the core znPP or miPP or PE or LLDPE or any blend of these polymers or other material. A typical extrusion temperature for spun laid non-woven material is of from 200 to 260°C, or typically around 230°C. A typical extrusion temperature for staple fibres is in the of from 200 to 330°C, more typically of from 260 to 300 °C. These concentration threshold and temperature profiles are given as an indication and depend among other things on the melt flow value of each polymer in the blend and on the difference in the melt flow values of the various polymers in the blend.

### Examples.

The syndiotactic polypropylene had a melt flow index MI2 of 3.6 g/10 min as measured following the method of standard test ASTM D 1238 at a temperature of 230 °C and under a load of 2.16 kg. It had two melting peaks respectively at 110 and at 127 °C, a number average molecular weight (Mn) of 37426, a weight average molecular weight (Mw) of 160229 and a molecular weight distribution of 4.3. The molecular weight distribution is defined here by the dispersion (D) that is the ratio Mw/Mn. The density was 0.89 g/cm³, as measured at 23 °C following the method of standard test ASTM D 1505.

It has been blended respectively:
- with 1 to 5 wt% of the anti-microbial Irgaguard B 1000 from CIBA in order to produce various woven or non-woven materials used for example in hygiene;
- with 1 to 5 wt% ot the anti-algae Irgaguard A 2000 from CIBA in order to produce fibres used in medical or agricultural or marine applications;
- with 12 to 75 wt% of the anti-static Irgastat P22 from CIBA in order to control the static electricity in fabrics or in carpets;
- with 5 to 20 wt% of the flame retardant Flamestab NOR 116 from CIBA in order to prepare woven or non-woven material used for example in upholstery, carpets, carpet backing, professional and ordinary clothing;
- with 1 to 10 wt% of the anti-UV Tinuvin 783 from CIBA, that is a synergistic mixture of chimassorb 944 and Tinuvin 622 or with 1 to 10 wt% of chimassorb 2020 from CIBA in order to prepare material for use in the textile industry;
- with 5 to 20 wt% of fillers such as kaolin or metal powders having a density higher than that of the sPP, in order to increase the density of the fibre above that of an immersing fluid. In addition, the sPP improves the rigidity of the finished product.
- with 1 to 10 wt% of carbon black in order to improve the anti-static properties of the woven or non-woven material;
- with various types of nanoparticles.

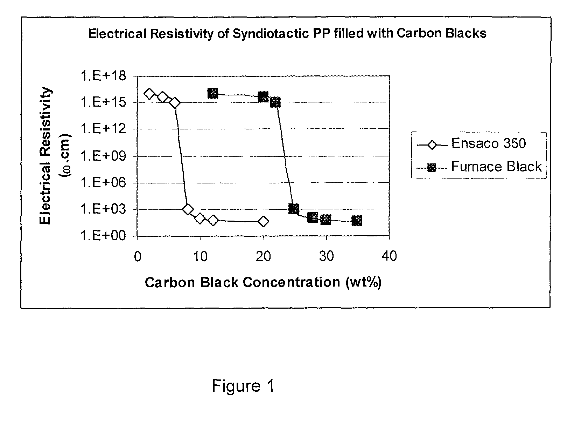

Several types of "black" additives have been tested in order to increase the electrical conductivity of polyolefin material. Figure 1 represents the electrical resistivity expressed in ohm.cm as a function of the concentration of the "black" additive expressed in wt%. It is observed that in all cases, the resistivity decreases rapidly as a function of increasing concentration of the "black" additive past a threshold that is a function of the nature of the additive. For additives made of nearly spherical particles such as furnace black, the threshold is very high and concentrations of 25 to 50 wt% of additive in the sPP are necessary to observe a decrease in resistivity. For additives having highly structured particles such as the product sold by MMM under the name Ensaco 350, the threshold is very low and concentrations of 9 to 15 wt% of additive in the sPP are necessary to observe a decrease in resistivity.

The polyolefin material comprised 10 wt% of sPP, the percentage being measured with respect to the total weight of polyolefins, in the absence of additives.

## Claims

1. Polyolefin material comprising a core portion composed of at least one of polypropylene produced using a Ziegler-Natta catalyst, isotactic homopolymer or random copolymer of propylene produced using a metallocene catalyst or polyethylene, preferably linear low density polyethylene, and an external layer composed of the core portion material additionally blended with a syndiotactic polypropylene, the syndiotactic polypropylene including at least one particulate material or chemical additive.

2. The polyolefin material of claim 1 wherein the amount of sPP in the blend of the external layer ranges from 1 to 20 wt%.

3. The polyolefin material of any one of the preceding claims wherein the at least one particulate material remains substantially in the sPP contained in the blend of the external layer at the surface of said external layer.

4. The polyolefin material of any one of the preceding claims wherein the amount of particulate material in the sPP is such that the surface concentration in particulate material of said polyolefin material is identical to that of a polyolefin material wherein the same particulate material is dispersed throughout the whole core of the polyolefin material.

5. The polyolefin material of claim 6 wherein the concentration in filler material dispersed in the sPP contained in the blend of the external layer is up to 10 times that recommended when used in the polyolefin core material.

6. The polyolefin material of any one of the preceding claims wherein the core material is substantially unchanged by the addition of particulate material to the sPP contained in the blend of the external layer.

7. Modified polyolefin fibres prepared with the polyolefin material according to any one of the preceding claims.

8. Use of the modified polyolefin fibres of claim 7 for improved spinning.

9. Use of the modified polyolefin fibres according to claim 7 with anti-microbial additves.

10. Use of the modified polyolefin fibres according to claim 7 with flame retardant additives.

11. Use of the modified polyolefin fibres according to claim 7 with anti-static additives.

12. Use of the modified polyolefin fibres according to claim 7 with anti-UV additives.

13. Use of the modified polyolefin fibres according to claim 7 with particulate fillers having a density higher than that of the sPP in order to increase the density of said fibres above that of an immersing fluid.

14. Use of the modified polyolefin fibres according to claim 7 with anti-algae additives.

15. Use of the modified polyolefin fibres according to claim 7 with nanoparticles fillers.

16. Use of the modified polyolefin fibres according to claim 7 with carbon black fillers.

17. Process for preparing the polyolefin material of any one of claims 1 to 6 comprising the steps of:
a) selecting a core material composed of at least one of polypropylene produced by Ziegler-Natta catalyst, isotactic homopolymer or copolymer of propylene produced using a metallocene catalyst or polyethylene, preferably linear low density polyethylene;
b) selecting a sydiotactic polypropylene, said syndiotactic polypropylene including at least one particulate material;
c) dry-blending the pellets of the filled sPP of step b) with those of the core material of step a);
d) extruding the blend of step c);
e) retrieving a polyolefin material wherein from 50 to 90 wt% of the sPP comprising particulate material is rejected in the external layer of said polyolefin material.
